(19) **Europäisches Patentamt**

**European Patent Office**

**Office européen des brevets**

(11) **EP 0 465 205 B1**

(12) **EUROPEAN PATENT SPECIFICATION**

(45) Date of publication and mention
of the grant of the patent:
**18.02.1998 Bulletin 1998/08**

(51) Int Cl.⁶: **G01N 15/02**

(21) Application number: **91305972.1**

(22) Date of filing: **01.07.1991**

(54) **Particle size distribution measuring apparatus**

Vorrichtung für die Bestimmung der Grössenverteilung von Teilchen

Dispositif pour mesurer la distribution des dimensions de particules

(84) Designated Contracting States:
**DE FR GB**

(30) Priority: **29.06.1990 JP 173919/90**

(43) Date of publication of application:
**08.01.1992 Bulletin 1992/02**

(73) Proprietor: **SHIMADZU CORPORATION**
**Kyoto 604 (JP)**

(72) Inventor: **Niwa, Takeshi**
**Nishikyo-ku, Kyoto 615 (JP)**

(74) Representative: **Smith, Philip Antony et al**
**REDDIE & GROSE**
**16 Theobalds Road**
**London WC1X 8PL (GB)**

(56) References cited:
**EP-A- 0 281 077**      **DE-A- 2 126 393**
**DE-A- 2 701 523**      **US-A- 4 890 920**

## Description

### Background of the Invention

The present invention relates to an apparatus for measuring the size distribution of particles by analyzing the intensity distribution of light rays produced with a laser beam scattered or diffracted by the particles, which are kept suspended in a fluid medium. Such apparatus is known from DE-A-2 701 523.

Such a particle size distribution measuring apparatus consists essentially of a laser beam system, a transparent flow cell, a Fourier transformation lens, a set of generally semi-circular arciform photosensors arrayed concentrically and a computer. A suspension of particles whose size distribution is to be measured is made to flow through the flow cell. With the flow cell irradiated with a laser beam prepared by the laser beam system, the particles flowing in the flow cell scatter or diffract the laser beam in various directions. Some of the scattered or diffracted rays of light are focused on the above arciform photosensors by the Fourier transform lens, the output signals from the photosensors are processed by the computer according to a known algorithm based on the Mie scattering or the Fraunhofer diffraction theory. In this type of particle size distribution measuring method, with an increase in the partice size, the scattered or diffracted rays have their intensity distribution peak made to appear at a smaller angle. Therefore, a measuring limit on the larger particle side is given, in principle, by the radius of the innermost one of the arciform photosensors (and by the distance between the flow cell and the photosensors). Under the circumstances, if the particies under investigation contain a large number of oversized particles, it is natural that the measuring apparatus in use should be replaced with a suitable one to expect an exact measurements of particle size distribution. However, the particle size distribution measuring apparatus of this type has a decisive disadvantage that, even in the case of the particles containing only a small amount of over-sized particles, such large particles are put substantially outside the measurement.

### Objects and Summary of the Invention

The present invention aims at solving the above-mention disadvantage accompanying the conventional light scattering/diffraction type particle size distribution measuring apparatus, and makes it an object to provide a new type particle size distribution measuring apparatus improved so as to detect at least the existence of over-sized particles.

Another object of the present invention is to constitute such an improved new type apparatus without incorporating any complex elements or devices.

To achieve the above objects, the apparatus according to the present invention is constitutionally different from the conventional apparatus only in the fact that the set of concentrically arranged arciform photosensors contains, at the center, a central photosensor for detecting a laser beam component straightly penetrating through the flow cell without being diffracted or scattered.

### Brief Description of the Drawings

In the following the present invention is described in further detail on reference of the accompanying drawings, in which :

Fig. 1 shows a schematical side view of the fundamental constitution of an embodiement of the present invention;

Fig. 2 shows a set of arciform photosensors used in the embadiment shown in Fig. 1;

Fig. 3 shows a graphical representation of the output signal from the central photosensor contained in the set of arciform photosensors shown in Fig. 2; and

Fig. 4 illustrates the laser beam component straightly penetrating through the flow cell.

### Detailed Description of the Invention

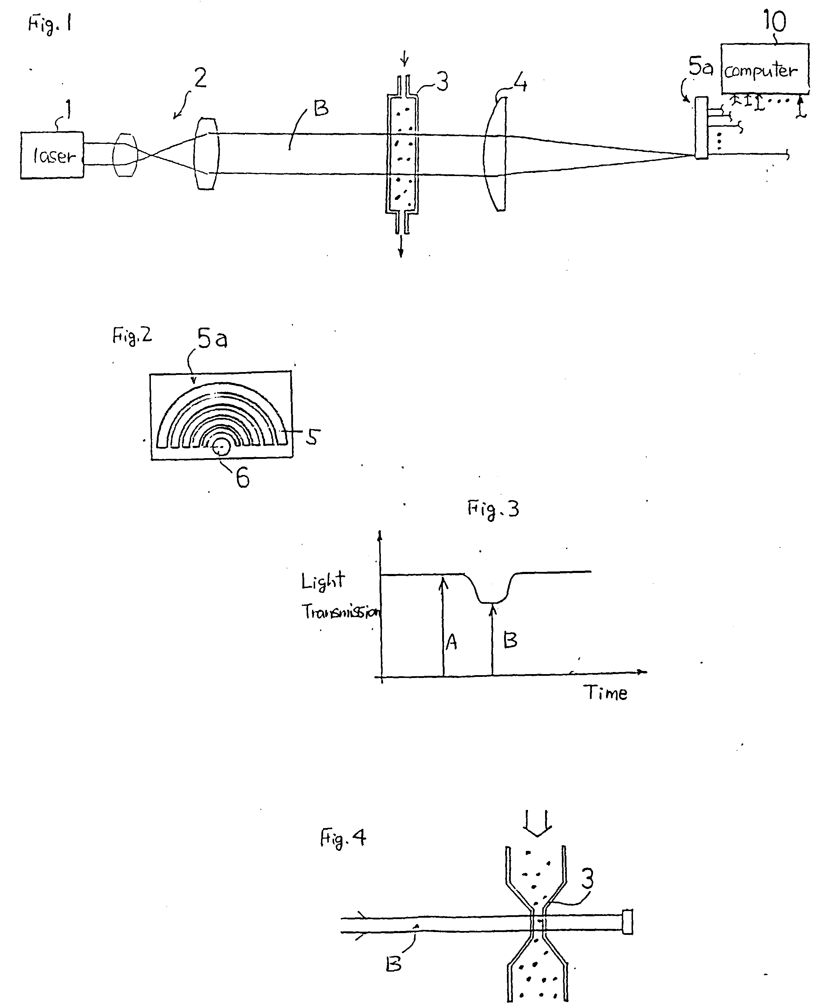

Referring to Fig. 1, which shows the entire constitution of an embodiment of the present invention, a light beam radiated from a laser 1 is arranged by a beam expander system 2 to a laser beam B having a predetermined diameter, and applied to-a flow cell 3 through which a suspension of sample particles is flowing. With the flow cell 3 irradiated by the laser beam B, the particles scatter or diffract the laser beam B in various directions. Some of the scattered or diffracted rays are focused, by a Fourier transformation lens 4, to arciform photosensors 5 concentrically arrayed on a sensor plate 5a (refer also to Fig. 2). The output signals from the arciform photosensors 5 are purposefully processed by a computer 10 in accordance with a known algorithm based on the Mie scattering or Fraunhofer diffraction theory. The size distribution of particle is thus given by the computer 10.

In addition to the above known function of measuring the particle size distribution, the present invention is provided with a function of detecting over-sized particles which can not be detected by the method of scattering or diffraction. Referring to Fig. 2, which shows the constitution of the sensor plate 5a, the above-mentioned arciform photosensors 5 are accompanied by a central photosensor 6 positioned at the center of the arciform photosensors 5. The central photosensor 6 detects the laser beam component penetrating straightly through the flow cell 3 without being scattered or diffracted. The output signal from the central photosensor 6 shows a dip, as illustrated in Fig. 3, each time an over-sized large particle tresspasses the beam penerating through the flow cell 3. Supposing the cross section of the beam to be $S_b$, the full and the dipped outputs A and B (see Fig. 3) from the central photosensor 6 are related to a cross-sectional area $S_p$ of the tresspassing large particle by an equation:

$$S_p = \frac{A - B}{A} \times S_b,$$

A and therefore, the diameter $D_p$ of the particle is given by

$$D_p = \sqrt{\frac{A - B}{A}} \times D_b,$$

where $D_b$ is a dimeter of the beam.

Although the diameter of the laser beam B is generally determined in consideration of the diameter of the Fourier transformation lens 4, a maximum detectable scattered or diffracted angle and the distance between the flow cell 3 and the lens 4, it is desirable in the present invention to choose as thin a beam as possible, as is easily understood from the above equations.

## Claims

1. A particle size distribution detecting apparatus consisting essentially of a laser beam system (1,2) a flow cell (3) for allowing particles in dispersion to flow, a Fourier transformation lens (4), a set (5a) of arciform photo-sensors (5) and means for analysing the output of the arciform photo-sensors to provide an indication of particle size distribution, the apparatus being characterised in that it further comprises a central photo-sensor (6) whose output is reduced by the passage through the flow cell (3) of oversized particles; the means for analysing the photo-sensor output providing an indication of the diameter of oversized particles from the reduction in the output from the central photo-sensor.

2. Apparatus according to claim 1 in which the diameter of the over-sized particle is determined by the means for analysing the photo-sensor output in accordance with the equation

$$Dp = \sqrt{\frac{A-B}{A}} x \, Db$$

where Dp is the diameter of the particle and Db is the diameter of the beam.

## Patentansprüche

1. Vorrichtung für die Bestimmung der Größenverteilung von Teilchen, die im wesentlichen aus einem Laserstrahlsystem (1, 2) und einer Durchflußküvette (3) besteht, die dazu dient, Teilchen in Dispersion zum Strömen zu bringen, einer Fourierschen Transformationslinse (4) einem Satz (5a) bogenförmiger Photosensoren (5) und einer Einrichtung zum Analysieren des Ausgangs der bogenförmigen Photosensoren, um eine Anzeige der Größenverteilung der Teilchen zu liefern, dadurch **gekennzeichnet,** daß die Vorrichtung ferner einen zentralen Photosensor (6) umfaßt, dessen Ausgang durch den Durchtritt übergroßer Teilchen durch die Durchflußküvette (3) eingeengt wird, wobei die Einrichtung zum Analysieren des Photosensor-Ausgangs aus der Verminderung des Ausgangs des zentralen Photosensors eine Anzeige für den Durchmesser der übergroßen Teilchen ableitet.

2. Vorrichtung nach Anspruch 1, dadurch **gekennzeichnet,** daß der Durchmesser der übergroßen Teilchen durch Analysieren des Ausgangs des Pho-tosensors nach der Gleichung

$$Dp = \sqrt{\frac{A-B}{A}} x \, Db$$

bestimmt wird, worin Dp der Durchmesser des Teilchens und Db der Durchmesser des Strahles ist.

## Revendications

1. Détecteur de répartition granulométrique, constitué essentiellement d'un système de faisceau laser (1,2), d'une cellule de circulation (3) permettant la circulation de particules en dispersion, d'une lentille de transformation de Fourier (4), d'un ensemble (5a) de photocapteurs en forme d'arc (5) et de moyens permettant d'analyser le signal de sortie délivré par les photocapteurs en forme d'arc afin de fournir une indication relative à la répartition granulométrique, le détecteur étant caractérisé en ce qu'il comprend, en outre, un photocapteur central (6) dont le signal de sortie est affaibli par le passage, à travers la cellule de circulation (3), de particules de grand diamètre ; les moyens permettant d'analyser le signal de sortie délivré par les photocapteurs fournissant une indication quant au diamètre des particules de grand diamètre à partir de l'affaiblissement du signal de sortie délivré par le photocapteur central.

2. Détecteur selon la revendication 1, dans lequel le diamètre des particules de grand diamètre est déterminé par les moyens destinés à analyser le signal de sortie délivré par les photocapteurs, suivant l'équation

$$Dp = \sqrt{\frac{A - B}{A}} \; x \; Db$$

dans laquelle Dp est le diamètre de la particule et Db est le diamètre du faisceau.

Fig. 1

Fig. 2    5a

Fig. 3

Fig. 4